# EUROPEAN PATENT SPECIFICATION

(11) **EP 3 196 510 B1**
(45) Date of publication and mention of the grant of the patent: **23.12.2020**
(21) Application number: 15832379.0
(22) Date of filing: 10.08.2015
(51) Int. Cl.: F16H 55/17, F16H 25/22, H02K 7/06, F16H 1/20, F16H 25/20, F16H 55/06

(54) **GEAR AND ELECTRIC ACTUATOR PROVIDED WITH SAME**
GETRIEBE UND ELEKTRISCHER AKTUATOR DAMIT
ENGRENAGE ET ACTIONNEUR ÉLECTRIQUE EN ÉTANT ÉQUIPÉ

(30) Priority: 12.08.2014 JP 2014164063
(43) Date of publication of application: 26.07.2017
(73) Proprietor: NTN Corporation, Osaka-shi, Osaka 550-0003 (JP)
(72) Inventor: IKEDA, Yoshinori, Iwata-shi Shizuoka 438-8510 (JP); KAWAGUCHI, Hayato, Iwata-shi Shizuoka 438-8510 (JP)
(74) Representative: Cohausz & Florack
(86) International application number: PCT/JP2015/072708
(87) International publication number: WO 2016/024578

(56) References cited:
- EP-A2- 1 023 960
- CN-A- 102 705 480
- JP-A- 2007 046 476
- JP-A- 2010 069 995
- JP-A- 2011 196 465
- JP-A- 2012 177 440

## Description

### Field of the Invention

The present invention relates to a sintered gear improved in quality and an electric actuator having a speed reduction mechanism provided with the sintered gear and a ball screw mechanism adapted to be used in motors in general industries and driving sections of automobiles etc., and more particularly to an electric actuator for converting a rotary motion from an electric motor to a linear motion of a driving shaft via the ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and simultaneously size of electric motor and power consumption are also increased. Thus, the ball screw mechanisms have been widely used as more efficient actuators.

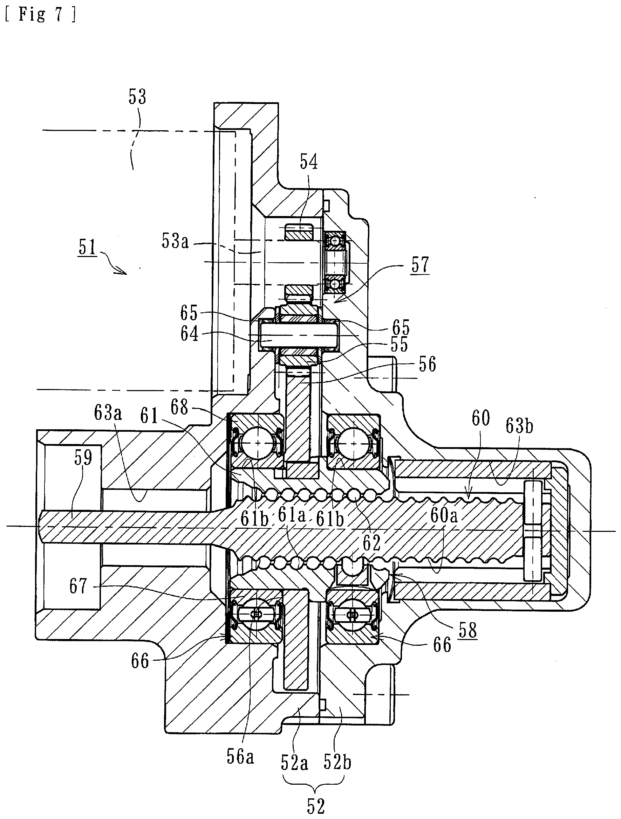

It has been known a structure e.g. shown in Fig. 7 as an electric actuator using the ball screw mechanism. The electric actuator 51 comprises a housing 52 including a first housing 52a and a second housing 52b, an electric motor 53 mounted on the housing 52, a speed reduction mechanism 57 for transmitting the rotational power of the electric motor 53 to a ball screw mechanism 58 via a motor shaft 53a, the ball screw mechanism 58 constituted to convert the rotational motion of the electric motor 53 to the axial linear motion of a driving shaft 59 via the speed reduction mechanism 57. The ball screw mechanism 58 comprises a nut 61 formed with a helical screw groove 61a on its inner circumference and supported rotationally and axially immovably via supporting bearings 66 mounted on the housing 52, and a screw shaft 60 axially integrated with the driving shaft 59 formed with a helical screw groove 60a on its outer circumference corresponding to the helical screw groove 61a of the nut 61, and inserted into the nut 61 via a plurality of balls 62 and supported not rotationally but axially movably.

The electric motor 53 is mounted on the first housing 52a and a bore 63a and a blind bore 63b are formed respectively in the first and second housings 52a, 52b for containing the screw shaft 60. The speed reduction mechanism 57 comprises an input gear 54 secured on the motor shaft 53a, an intermediate gear 55 and an output gear 56 secured on the nut 61 and mating with the intermediate gear 55.

A gear shaft 64 is supported on the first and second housings 52a, 52b and bushes 65 of synthetic resin are interposed either one or both of space between the gear shaft 64 and intermediate gear 55 or between the first and second housings 52a, 52b and the gear shaft 64 and thus the intermediate gear 55 can be rotationally supported relative to the housing 52. Accordingly it is possible to provide an electric actuator 51 which can interrupt or reduce transmission of vibration caused by a play between the intermediate gear 55 and the gear shaft 64 as well as by a play of gear shaft 64 itself (see e.g. Patent Document 1 below).

### Document of the Prior Art

### Patent Document

Patent Document 1: JP 2013 -148108 A

Further documents of the prior art are:
- JP 2012 177 440 A, which discloses an engine transmission,
- JP 2007 046 476 A, which discloses an integrally molded gear and a kick starter for an internal combustion engine,
- JP 2010 069 995 A, which discloses an electric power steering device, and
- JP 2011 196 465 A, which discloses a gear device.

### Disclosure of the Invention

### Problems to be solved by the Invention

In the electric actuator 51 of the prior art, the rotational power of the electric motor 53 is transmitted to the nut 61 of the ball screw mechanism 58 via the speed reduction mechanism 57 comprising the input gear 54, the intermediate gear 55 and the output gear 56. The nut 61 is rotationally supported by a pair of the supporting bearings 66 comprising deep groove ball bearings. The output gear 56 is arranged between two supporting bearings 66 and secured on the nut 61 via a key with being contacted with an inner ring 67 of one of the supporting bearings 66.

The inner rings 67 of the bearings 66 are secured on the outer circumference of the nut 61 and thus rotated together with the nut 61. On the other hand, the outer rings 68 of the bearings 66 cannot rotate since they are securely fitted in the housing 52. Accordingly, since smooth rotation of the output gear 56 would be impaired if the side surface of the output gear 56 is contacted with the end face of the outer ring 68 of the bearing 66, the output gear 56 is formed so that its axial thickness is smaller than its boss 56a contacted with the inner ring 67 of the bearing 66 to prevent contact of the output gear 56 against the outer ring 68 of the bearing 66.

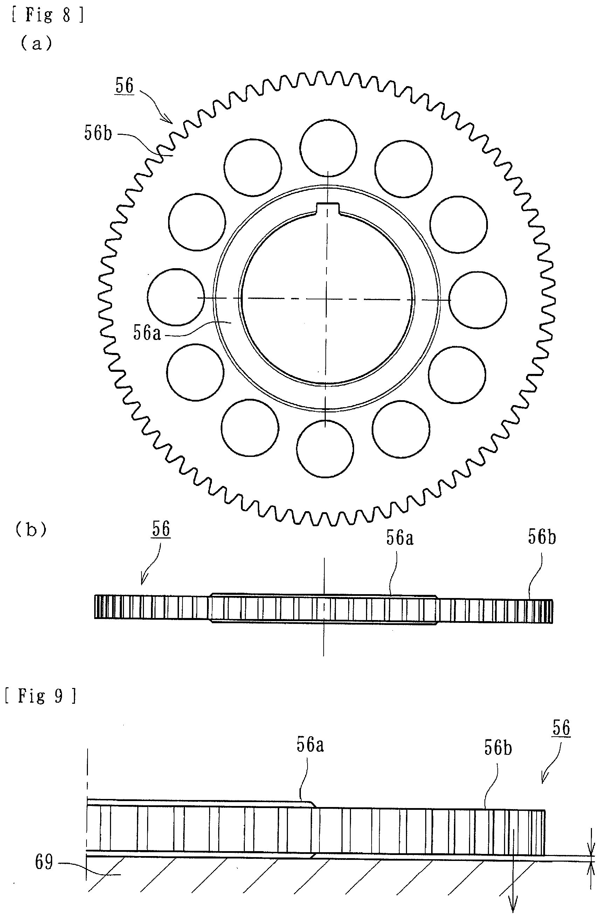

From such a reason, the output gear 56 is formed so that its axial thickness is small except for its boss 56a as shown in Fig. 8(b). In the output gear 56 having such a configuration, only the boss 56a is contacted with a supporting surface 69 and the tooth tip portion 56b is not contacted with the supporting surface 69 when the output gear 56 is placed on the supporting surface 69 during the manufacturing step of the output gear 56. Accordingly, it is afraid that a bow would be caused in the tooth tip portion 56b as shown by an arrow in Fig. 9 and this would impair the manufacturing accuracy of the output gear 56.

Especially in the case of a gear made of sintered alloy such as the output gear 56 used in the electric actuator 51 of the prior art, the configuration of the output gear 56 would be deformed by its own weight due to insufficiency of the binding degree of powder for a time till desired strength has been obtained after completion of sintering treatment in its manufacturing processes. In addition, corners of teeth of the sintered output gear 56 tend to be damaged and thus it is a problem that damages of teeth would be caused by interference of the teeth tips 56b with a surface 69 of a supporting table due to vibrations during transfer of gears 56 in a laid state just after their compaction in manufacturing steps.

It is, therefore, an object of the present invention to provide a sintered gear having improved quality which can prevent the tooth damage and deformation such as bow of the teeth during manufacturing steps of the sintered gear and an electric actuator provided with such a sintered gear.

### Means for solving the Problems

For achieving the object of the present invention, there is provided according to the present invention of claim 1, a gear formed of sintered alloy comprising spur teeth formed on a circumference of the gear; a central hole on the center of the gear; a boss formed around the central hole; and a peripheral portion formed radially inner side of the teeth, a thickness of a region between the boss and the peripheral portion being thinner than that of the boss characterized in that the peripheral portion is formed on at least one side of the gear and has an axially large thickness than the teeth, that a stepped portion is provided between an end face of the teeth and a side surface of the peripheral portion, that the clearance amount between the tooth and the peripheral portion of the gear is limited within a range of 0.1∼0.5 mm and that a width of a stepped portion from the peripheral portion to the tooth tip is set to 1∼2 times the whole depth of the tooth.

According to the gear, since it comprises spur teeth formed on a circumference of the gear; a central hole on the center of the gear; a boss formed around the central hole; and a peripheral portion formed radially inner side of the teeth, a thickness of a region between the boss and the peripheral portion being thinner than that of the boss and is characterized in that the peripheral portion is formed on at least one side of the gear and has an axially large thickness, it is possible to easily form a gear having a desired exact configuration and dimension although it has a complicated configuration requiring high manufacturing accuracy and also possible to prevent gear teeth from being damaged due to interference of the teeth tips with a surface of a supporting table during motion or transfer of the gears and due to deformation caused by weight of gear itself even if the binding degree of powder is insufficient. In addition, it is possible to prevent degradation of accuracy of the gear which would be caused by contact of not only the boss but also the peripheral portion near the teeth tips against the supporting table when the gear is laid on the table during manufacturing steps and thus also possible to provide a gear having improved quality.

It is preferable as defined in claim 2 that the axial thickness of the peripheral portion and that of the boss of the gear are same, and side faces of the peripheral portion and the boss of at least one side of the gear are axially flush with each other.

As defined in claim 1, the clearance amount between the tooth and the peripheral portion of the gear is limited within a range of 0.1∼0.5 mm. This makes it possible to protect the tooth tip of the gear and to suppress variation of the density of each part of the gear due to variation of compaction distance in sintering to minimum.

As defined in claim 1, a width of a stepped portion from the peripheral portion to the tooth tip is set to 1∼2 times the whole depth of the tooth. This makes it possible to prevent the bow of the tooth tip portion due to deformation of the peripheral portion even if the gear is laid on a table.

It is preferable as defined in claim 3 that a plurality of lightening holes are formed equidistantly along a circle between the peripheral portion and the boss. This enables to keep the strength and rigidity with reducing the weight of the gear.

According to claim 4 of the present, invention, there is provided an electric actuator comprising a housing; an electric motor mounted on the housing; a speed reduction mechanism for transmitting rotational force of the motor to a ball screw mechanism; and the ball screw mechanism being able to convert the rotational motion of the electric motor to the axial linear motion of a driving shaft and comprising a nut and a screw shaft, the nut being formed with a helical screw groove on its inner circumference, secured on its outer circumference an output gear forming part of the speed reduction mechanism and supported rotationally but axially immovably relative to the housing by a pair of supporting bearings mounted on the housing, and the screw shaft formed with a helical screw groove on the outer circumference corresponding to the helical screw groove of the nut, adapted to be inserted into the nut via a large number of balls, and supported not rotationally but axially movably relative to the housing characterized in that an end face of an inner ring of one supporting bearing of the pair of supporting bearings and a side surface of the boss are closely contacted each other, and that the output gear is configured by a gear defined in any one of claims 1∼3.

According to the electric actuator of the present invention of claim 4, since it comprises a housing; an electric motor mounted on the housing; a speed reduction mechanism for transmitting rotational force of the motor to a ball screw mechanism; and the ball screw mechanism being able to convert the rotational motion of the electric motor to the axial linear motion of a driving shaft and comprising a nut and a screw shaft, the nut being formed with a helical screw groove on its inner circumference, secured on its outer circumference an output gear forming part of the speed reduction mechanism and supported rotationally but axially immovably relative to the housing by a pair of supporting bearings mounted on the housing, and the screw shaft formed with a helical screw groove on the outer circumference corresponding to the helical screw groove of the nut, adapted to be inserted into the nut via a large number of balls, and supported not rotationally but axially movably relative to the housing and is characterized in that an end face of an inner ring of one supporting bearing of the pair of supporting bearings and a side surface of the boss are closely contacted each other, and that the output gear is configured by a gear defined in any one of claims 1∼3, it is possible to provide an electric actuator having improved quality which can achieve smooth rotation of the output gear, and prevent gear teeth damage and gear bow which would be caused during manufacture of the sintered gear.

### Effects of the invention

According to the gear, since it comprises spur teeth formed on a circumference of the gear; a central hole on the center of the gear; a boss formed around the central hole; and a peripheral portion formed radially inner side of the teeth, a thickness of a region between the boss and the peripheral portion being thinner than that of the boss and is characterized in that the peripheral portion is formed on at least one side of the gear and has an axially large thickness, it is possible to easily form a gear having a desired exact configuration and dimension although it has a complicated configuration requiring high processing accuracy and also possible to prevent gear teeth from being damaged due to interference of the teeth tips with a surface of a supporting table during motion or transfer of the gears and due to deformation caused by weight of gear itself even if the binding degree of powder is insufficient. In addition, it is possible to prevent degradation of accuracy of the gear which would be caused by contact of not only the boss but also the peripheral portion near the teeth tips against the supporting table when the gear is laid on the table during manufacturing steps and thus also possible to provide a gear having improved quality.

According to the electric actuator of the present invention, since it comprises a housing; an electric motor mounted on the housing; a speed reduction mechanism for transmitting rotational force of the motor to a ball screw mechanism; and the ball screw mechanism being able to convert the rotational motion of the electric motor to the axial linear motion of a driving shaft and comprising a nut and a screw shaft, the nut being formed with a helical screw groove on its inner circumference, secured on its outer circumference an output gear forming part of the speed reduction mechanism and supported rotationally but axially immovably relative to the housing by a pair of supporting bearings mounted on the housing, and the screw shaft formed with a helical screw groove on the outer circumference corresponding to the helical screw groove of the nut, adapted to be inserted into the nut via a large number of balls, and supported not rotationally but axially movably relative to the housing and is characterized in that an end face of an inner ring of one supporting bearing of the pair of supporting bearings and a side surface of the boss are closely contacted each other, and that the output gear is configured by a gear defined in any one of claims 1∼3, it is possible to provide an electric actuator having improved quality which can achieve smooth rotation of the output gear, and prevent gear teeth damage and gear bow which would be caused during manufacture of the sintered gear.

### Brief description of the Drawings

[Fig. 1] A longitudinal section view showing one preferable embodiment of an electric linear actuator of the present invention;
[Fig. 2] An enlarged longitudinal section view showing the ball screw mechanism of Fig. 1;
[Fig. 3] A perspective view showing an output gear of the present invention;
[Fig. 4] A partially enlarged view showing a contact portion between the output gear of Fig. 1 and a supporting bearing;
[Fig. 5(a)] An explanatory view showing a state of the output gear of Fig. 1 laid on a supporting table;
[Fig. 5(b)] A partially enlarged view showing a tooth tip of the output gear of Fig. 5(a);
[Fig. 6] An explanatory view showing relations of dimensions of the tooth tip of Fig. 5;
[Fig. 7] A longitudinal section view showing an electric linear actuator of the prior art;
[Fig. 8(a)] A plan view showing the output gear of Fig. 7;
[Fig. 8(b)] A front view showing the output gear of Fig. 8(a); and
[Fig. 9] An explanatory view showing a state of the output gear of Fig. 7 laid on a supporting table.

### Mode of carrying out the invention

One mode for carrying out the present invention is an electric actuator comprising a housing; an electric motor mounted on the housing; a speed reduction mechanism for transmitting rotational force of the motor to a ball screw mechanism; and the ball screw mechanism being able to convert the rotational motion of the electric motor to the axial linear motion of a driving shaft and comprising a nut and a screw shaft, the nut being formed with a helical screw groove on its inner circumference, secured on its outer circumference an output gear forming part of the speed reduction mechanism and supported rotationally but axially immovably relative to the housing by a pair of supporting bearings mounted on the housing, and the screw shaft formed with a helical screw groove on the outer circumference corresponding to the helical screw groove of the nut, adapted to be inserted into the nut via a large number of balls, and supported not rotationally but axially movably relative to the housing characterized in that the speed reduction mechanism comprises an intermediate gear mating with an input gear secured on a motor shaft of the electric motor and an output gear integrally secured on the nut forming a part of the ball screw mechanism; that an end face of an inner ring of one supporting bearing of the pair of supporting bearings and a side surface of the boss are closely contacted each other; and that the output gear is formed of sintered alloy, and comprises spur teeth formed on the circumference of the output gear and a central hole on the center of the output gear, a boss formed around the central hole, and a peripheral portion formed radially inner side of the teeth; that a thickness of a region between the boss and the peripheral portion is thinner than other portions of the output gear; that a plurality of lightening holes are formed equidistantly along a circle between the peripheral portion and the boss; and that the axial thickness of the peripheral portion and that of the boss of the gear are substantially same and side faces of the peripheral portion and the boss of at least one side of the gear are axially flush with each other.

### Embodiment

One preferred embodiment of the present invention will be hereinafter described with reference to the drawings.

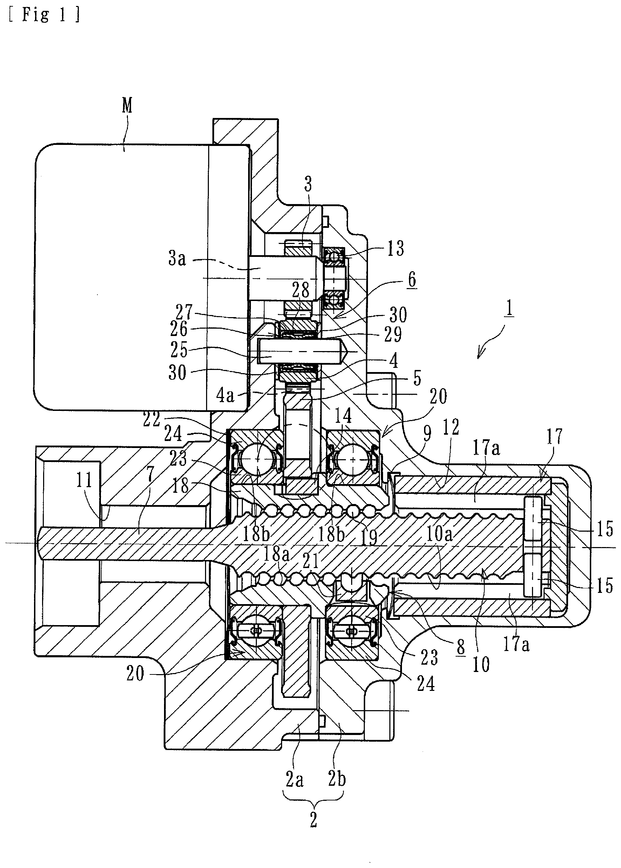

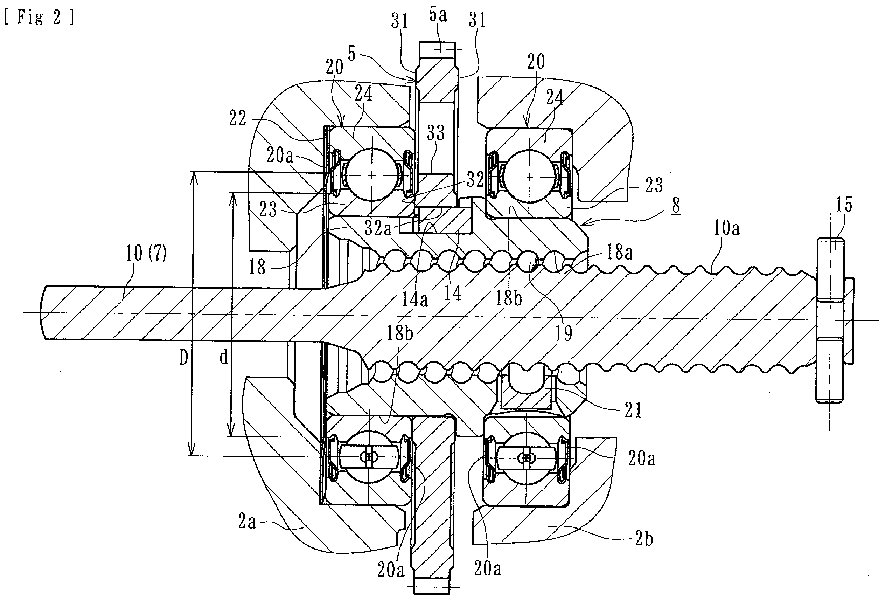

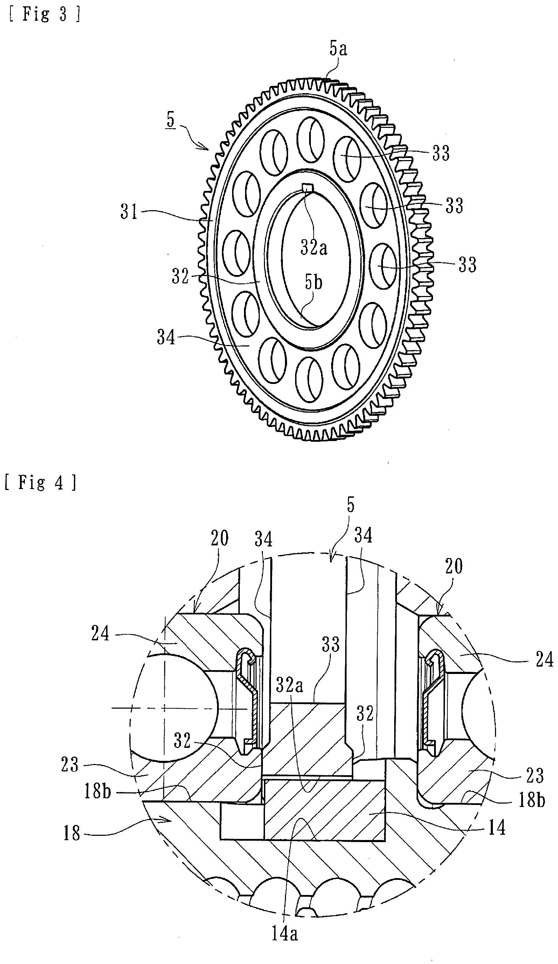

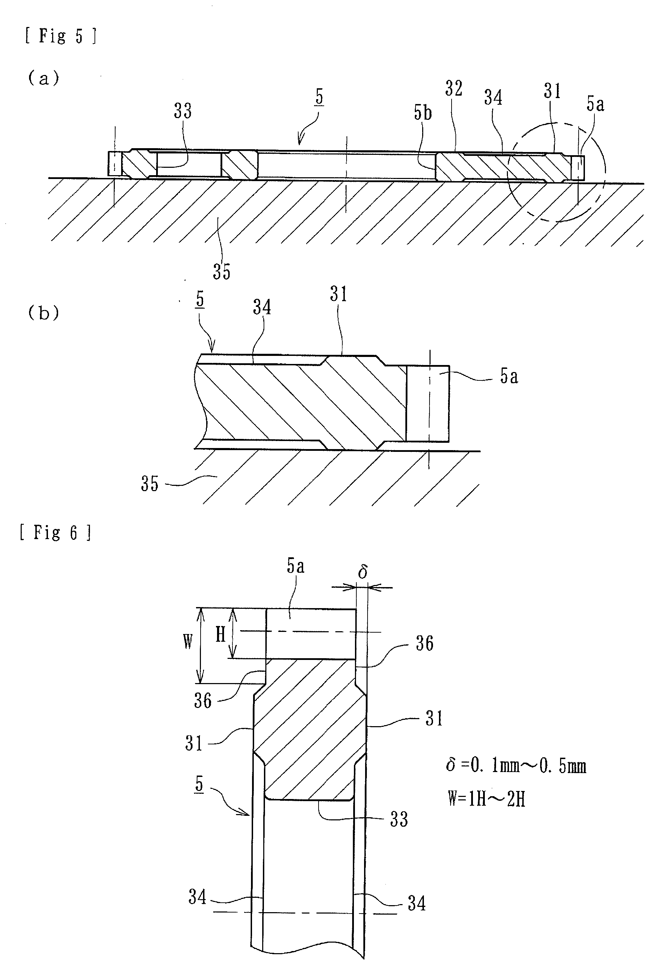

Fig. 1 is a longitudinal section view showing one preferable embodiment of an electric linear actuator of the present invention, Fig. 2 is an enlarged longitudinal section view showing the ball screw mechanism of Fig. 1, Fig. 3 is a perspective view showing an output gear of the present invention, Fig. 4 is a partially enlarged view showing a contact portion between the output gear of Fig. 1 and a supporting bearing, Fig. 5(a) is an explanatory view showing a state of the output gear of Fig. 1 laid on a supporting table, Fig. 5(b) is a partially enlarged view showing a tooth tip of the output gear of Fig. 5(a), and Fig. 6 is an explanatory view showing relations of dimensions of the tooth tip of Fig. 5.

As shown in Fig. 1, the electric actuator 1 comprises a cylindrical housing 2, an electric motor M mounted on the housing 2, a speed reduction mechanism 6 comprising an intermediate gear 4 mating with an input gear 3 mounted on a motor shaft 3a of the electric motor M and an output gear 5 mating with the intermediate gear 4, and a ball screw mechanism 8 for converting rotational motion of the electric motor M to axial linear motion of a driving shaft 7 via the speed reduction mechanism 6.

The housing 2 is formed of aluminum alloy such as A 6063 TE, ADC 12 etc. by die casting and comprises a first housing 2a and a second housing 2b abutted and bolted to an end face of the first housing 2a. The electric motor M is mounted on the first housing 2a. The first housing 2a and the second housing 2b are formed with a through bore 11 and a blind bore 12 respectively for containing the screw shaft 10 coaxially integrated with the driving shaft 7.

The input gear 3 is press-fitted onto the end of the motor shaft 3a of the electric motor M so as not to be relatively rotated and rotationally supported by a rolling bearing 13 comprising a deep groove ball bearing mounted on the second housing 2b. The output gear 5 mating with the intermediate spur gear 4 is integrally secured on a nut 18 forming part of the ball screw mechanism 8 via a key 14.

The driving shaft 7 is integrally formed with a screw shaft 10 forming part of the ball screw mechanism 8 and guide pins 15, 15 are mounted on one end (right-side end in Fig. 1) of the driving shaft 7. A sleeve 17 is fitted in the blind bore 12 of the second housing 2b. On the inner circumference of the sleeve 17, axially extending recessed grooves 17a, 17a are formed by grinding. The recessed grooves 17a, 17a are circumferentially oppositely arranged and the guide pins 15, 15 engage them to support the screw shaft 10 axially movably but not rotationally. Falling-out of the sleeve 17 can be prevented by a stopper ring 9 mounted on an opening of the blind bore 12 of the second housing 2b.

The sleeve 17 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted state and finally formed to the sleeve by a so-called MIM (Metal Injection Molding) method. The MIM method can easily mold sintered alloy material to article having desirable accurate configurations and dimensions although the article require high manufacturing technology and have configurations hard to form.

On the other hand, the guide pins 15 are formed of high carbon chromium bearing steel such as SUJ 2 or carburized bearing steel such as SCr 435 and their surfaces are formed with carbonitrided layer having carbon content more than 0.80 %by weight and hardness more than 58 HRC. In this case it is possible to adopt needle rollers used in needle bearings as guide pins 15. This makes it possible to have the guide pins 15 having hardness of HRC 58 or more and being excellent in anti-wear property, availability and manufacturing cost.

As shown in the enlarged view of Fig. 2, the ball screw mechanism 8 comprises the screw shaft 10 and the nut 18 inserted on the screw shaft 10 via balls 19. The screw shaft 10 is formed on its outer circumference with a helical screw groove 10a and supported axially movably but not rotationally. On the other hand, the nut 18 is formed on its inner circumference with screw groove 18a corresponding to the screw groove 10a of the screw shaft 10 and a plurality of balls 19 are rollably contained between the screw grooves 10a, 18a. The nut 18 is supported by two supporting bearings 20, 20 rotationally but axially immovably relative to the housings 2a, 2b. A numeral 21 denotes a bridge member for achieving an endless circulating passage of balls 19 through the screw groove 18a of the nut 18.

The cross-sectional configuration of each screw groove 10a, 18a may be either one of circular-arc or Gothic-arc configuration. However, the Gothic-arc configuration is adopted in this embodiment since it can have a large contacting angle with the ball 19 and set a small axial gap. This enables to have large rigidity against the axial load and thus to suppress generation of vibration.

The nut 18 is formed of case hardened steel such as SCM 415 or SCM 420 and its surface is hardened to HRC 55∼62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM 415 or SCM 420 and its surface is hardened to HRC 55∼62 by induction hardening or carburizing hardening.

The output gear 5 forming part of the speed reduction mechanism 6 is firmly secured on the outer circumference 18b of the nut 18 via a key 14 and the support bearings 20, 20 are press-fitted onto the nut 18 via a predetermined interference at both sides of the output gear 5. More particularly, the output gear 5 is secured on the nut 18 by the key 14 fitted in a rectangular space formed by a key way 14a formed on an outer circumference 18b of the nut 18 and a key way 32a formed on an inner circumference of the output gear 5. This enables to prevent both the supporting bearings 20, 20 and output gear 5 from being axially shifted although strong thrust load would be applied to them from the driving shaft 7. Each supporting bearing 20 comprises a deep groove ball bearing on both sides of which is mounted shield plates 20a, 20a for preventing lubricating grease sealed within the bearing body from being leaked outside and abrasive debris from being entered into the bearing body from outside.

In the present embodiment, since both the supporting bearings 20, 20 are formed by deep groove ball bearing having same specifications, it is possible to support both a thrust load applied from the driving shaft 7 and a radial load applied from the output gear 5 and also to simplify confirmation work for preventing error in assembly of the bearing and thus to improve the assembling operability. In this case, the term "same specifications" means that the deep groove ball bearings have same inner diameters, outer diameters, width dimensions, rolling element sizes, rolling element numbers and internal clearances.

One of the pair of supporting bearings 20, 20 is mounted on the first housing 2a via a washer 22 comprising a ring-shaped elastic member. The washer 22 is a wave washer press-formed of austenitic stainless steel (JIS SUS 304 etc.) or preserved cold rolled steel sheet (JIS SPCC etc.) having high strength and wear resistance and an inner diameter D of the washer 22 is larger than an outer diameter d of the inner ring 23 of the supporting bearing 20. This makes it possible to eliminate axial play of the pair of supporting bearings 20, 20 and thus to obtain smooth rotation of the nut 18. In addition, since the washer 22 contacts only the outer ring 24 of the supporting bearing 20 and does not contact the rotational inner ring 23, it is possible to prevent the inner ring 23 of the supporting bearing 20 from being contacted with the housing 2a even if the nut 18 is urged toward the housing 2a by reverse-thrust load which would be often caused and thus to prevent the nut 18 from being locked by increase of frictional force.

As shown in Fig. 1 again, a gear shaft 25 of the intermediate gear 4 forming part of the speed reduction mechanism 6 is fitted in the first and second housings 2a, 2b and the intermediate gear 4 is rotationally supported on the gear shaft 25 via a rolling bearing 26. When press-fitting one end (e.g. first housing 2a-side end) of the gear shaft 25 into the first housing 2a, it is possible to allow assembling misalignment and thus to obtain smooth rotational performance by performing the clearance fitting of the other end (e.g. second housing 2b-side end). The rolling bearing 26 is formed of a needle roller bearing of a so-called shell type comprising an outer ring 27 press-formed of steel sheet and press-fitted into an inner circumference of the intermediate gear 4, and a plurality of needle rollers 29 rollably contained in the outer ring 27 via a cage 28. This enables to adopt bearings of easily available standard design and thus to reduce the manufacturing cost.

Ring-shaped washers 30, 30 are installed on both sides of the intermediate gear 4 to prevent direct contact of the intermediate gear 4 against the first and second housings 2a, 2b. In this embodiment, the face width of the teeth 4a of the intermediate gear 4 is formed smaller than an axial width of the gear blank. This makes it possible to reduce contact area between the intermediate gear 4 and the washers 30, 30 and thus their frictional resistance and to obtain smooth rotational performance. The washers 30 are flat washers press-formed of austenitic stainless steel sheet or preserved cold rolled steel sheet having high strength and frictional resistance. Alternatively, the washers 30 may be formed of brass, sintered metal or thermoplastic synthetic resin such as PA (polyamide) 66 in which a predetermined amount of fiber reinforcing material such as GF (glass fibers) is impregnated.

The output gear 5 is formed of sintered alloy and comprises spur teeth 5a on its circumference and a central (circular) hole 5b adapted to be fitted on the outer circumference 18b of the nut 18. A plurality of lightening holes 33 are formed in a middle portion 34 equidistantly along a circle between a peripheral portion 31 near the teeth 5a and a boss 32 near the central hole 5b. Said key way 32a engaging with a securing key 14 is formed on the inner circumference of the boss 32. Although it is illustrated circular lightening holes 33, the shape of each hole 33 is not limited to a circle and any other shape e.g. an egg-shape or a triangle having a configuration expanding toward radially outward may be possible if the lightening holes 33 can reduce the weight of the output gear 5 with keeping the strength and rigidity of the output gear 5.

Metallic powder for the sintering alloy comprises completely alloyed powder Fe, Mo, Ni (atomized iron powder of alloyed and melted steel in which alloyed components are uniformly distributed in grains) or partially alloyed powder (alloyed powder in which partially alloyed powder is adhered to pure iron powder). One example of the alloyed powders is hybrid type alloyed powder (trade name JIP 21 SX of JFE steel Co., Japan) in which pre-alloy copper powder comprising Fe of 2%by weight, Ni of 1%by weight and Mo is adhered to fine Ni powder, Cu powder and graphite powder via binder. This hybrid type alloyed powder is able to obtain high mechanical strength (tensioning strength and hardness) due to increase of martensite phase ratio to the metallic structure of sintered body with increasing the cooling speed (higher than 50°C/min) after sintering, to eliminate heat treatment after sintering and thus to provide an output gear of high accuracy. It is preferable to add Mo of 0.5∼1.5% by weight in order to improve the hardenability and Ni of 2∼4% by weight in order to improve the toughness of a sintered body. Similarly to the sleeve 17 described above, the output gear 5 may be formed of sintered alloy by MIM method by preparing the metallic powder plastically.

As shown in Fig. 5(a), the axial thickness of the peripheral portion 31 near the teeth 5a and that of the boss 32 near the central hole 5b of the gear 5 are substantially same, side faces of the peripheral portion 31 and the boss 32 of the gear 5 are substantially axially flush with each other and the axial thickness of the middle portion 34 between the peripheral portion 31 and a boss 32 is set thinner. The terms "substantially same" and "substantially axially flush" in the specification mean only target values in design and thus errors caused by machining should be naturally allowed.

The output gear 5 having such structure enables the end face of the inner ring 23 of the supporting bearing 20 rotating together with the nut 18 to be closely contacted with the side surface of the boss 32 of the output gear 5, on the other hand the outer ring 24 of stationary side to be separated from the side surface of the boss 32 as shown in Fig. 4. Thus, smooth rotation of the output gear 5 can be assured.

In addition, since the axial thickness of the peripheral portion 31 near the teeth 5a and that of the boss 32 near the central hole 5b of the gear 5 are substantially same and side faces of the peripheral portion 31 and the boss 32 of the gear 5 are substantially axially flush with each other, not only the boss 32 but also the peripheral portion 31 are contacted with a surface of a supporting table 35 as shown in Fig. 5(b) when the gear 5 is laid on the supporting table in manufacturing steps of the gear 5. Accordingly, it is possible to prevent damage of the gear teeth 5a and thus its degradation of accuracy due to interference of the teeth 5a with the surface of the supporting table which would be caused by deformation of the gear 5 by its own weight even if the binding degree of powder is insufficient.

In addition, in the output gear 5 formed of sintered alloy of this kind, it is a problem that variation of the density of each part of the gear 5 tends to be generated due to variation of compaction distance (pressing distance) during sintering when a clearance amountδ of a stepped portion 36 between the end face of the tooth 5a and the side surface of the peripheral portion 31 is set too large as shown in Fig. 6. Thus, according to the present embodiment, the clearance amount δ between the tooth 5a and the peripheral portion 31 of the gear 5 is limited within a range of 0.1∼0.5 mm in order to protect the tip ends of the teeth 5a and suppress variation of the density of each part of the gear.

Furthermore, a width W of the stepped portion 36 from the peripheral portion 31 to the tooth tip is set to 1∼2 times the whole depth H of the tooth 5a (W=1∼2H). This makes it possible to prevent the bow of the tooth tip portion due to deformation of the peripheral portion 31 even if the gear 5 is laid on the supporting table.

Although it is shown in the exemplified embodiment the output gear 5 in which the axial thickness of the peripheral portion 31 near the teeth 5a and that of the boss 32 near the central hole 5b of the gear 5 are substantially same, and both side faces of the peripheral portion 31 and the boss 32 of the gear 5 are substantially axially flush with each other, the present invention is not limited to such an embodiment and accordingly it may be possible to arrange so that side faces of the peripheral portion 31 and the boss 32 of at least one side of the gear 5 are substantially axially flush with each other, and at least the boss 32 contacting the side surface of the inner ring 23 is formed thicker so as to achieve that the outer ring 24 of the supporting bearing 20 does not contact with the side face of the boss 32 of the output gear 5.

In addition, the side faces of the peripheral portion 31 near the teeth 5a and the boss 32 near the central hole 5b do not necessarily have to be flat all along their circumference and at least the side face of boss 32 may be an uneven surface so that oil films of lubrication grease can be easily formed in order to prevent fretting of the contact surfaces between the boss 32 and the inner ring 23 of the supporting bearing 20.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The electric actuator of the present invention can be used to electric motors for a general industry use, driving portions of an automobile etc. and applied to an actuator provided with a ball screw mechanism for converting a rotational input motion from an electric motor to a linear motion of a driving shaft via a gear reduction mechanism.

### Description of Reference numerals

- 1: electric linear actuator
- 2: housing
- 2a: first housing
- 2b: second housing
- 3: input gear
- 3a: motor shaft
- 4: intermediate gear
- 4a: teeth
- 5: output gear
- 5a: teeth of output gear
- 5b: central hole
- 6: speed reduction mechanism
- 7: driving shaft
- 8: ball screw mechanism
- 9: stopper ring
- 10: screw shaft
- 10a, 18a: screw groove
- 11: through bore
- 12: blind bore
- 13, 26: rolling bearing
- 14: key
- 14a, 32a: key way
- 15: engaging pin
- 17: sleeve
- 17a: recessed groove
- 18: nut
- 18b: outer circumference of nut
- 19: ball
- 20: supporting bearing
- 20a: shield plate
- 21: bridge member
- 22, 30: washer
- 23: inner ring of supporting bearing
- 24: outer ring of supporting bearing
- 25: gear shaft of intermediate gear
- 27: outer ring of rolling bearing
- 28: cage of rolling bearing
- 29: needle roller of rolling bearing
- 31: peripheral portion near teeth
- 32: boss near central hole
- 33: lightening hole
- 34: middle portion
- 35: supporting table
- 36: stepped portion
- 51: electric actuator
- 52: housing
- 52a: first housing
- 52b: second housing
- 53: electric motor
- 53a: motor shaft
- 54: input gear
- 55: intermediate gear
- 56: output gear
- 56a: boss
- 56b: tooth tip portion
- 57: speed reduction mechanism
- 58: ball screw mechanism
- 59: driving shaft
- 60: screw shaft
- 60a, 61a: screw groove
- 61: nut
- 61b: outer circumference of nut
- 62: ball
- 63a, 63b: blind bore
- 64: gear shaft
- 65: bush
- 66: supporting bearing
- 67: inner ring
- 68: outer ring
- 69: supporting table
- D: inner diameter of washer
- d: outer diameter of inner ring of supporting bearing
- H: whole depth of tooth
- M: electric motor
- W: width of stepped portion
- δ: clearance amount of stepped portion

## Claims

1. A gear (5) formed of sintered alloy comprising:
spur teeth (5a) formed on a circumference of the gear (5);
a central hole (5b) on the center of the gear (5); and
a boss (32) formed around the central hole (5b), wherein
a peripheral portion (31) is formed radially inner side of the teeth (5a), a thickness of a region between the boss (32) and the peripheral portion (31) being thinner than that of the boss (32); **characterized in:**
**that** the peripheral portion (31) is formed on at least one side of the gear (5) and has an axially larger thickness than the teeth (5a), that a stepped portion (36) is provided between an end face of the teeth (5a) and a side surface of the peripheral portion (31), that a clearance amount (δ) between the tooth (5a) and the peripheral portion (31) of the gear (5) is limited within a range of 0.1∼0.5 mm and that a width (W) of a stepped portion (36) from the peripheral portion (31) to the tooth tip is set to 1∼2 times the whole depth (H) of the tooth (5a).

2. A gear (5) of claim 1 wherein the axial thickness of the peripheral portion (31) and that of the boss (32) of the gear (5) are same, and side faces of the peripheral portion (31) and the boss (32) of at least one side of the gear (5) are axially flush with each other.

3. A gear (5) of claim 1 or claim 2 wherein a plurality of lightening holes (33) are formed equidistantly along a circle between the peripheral portion (31) and the boss (32).

4. An electric actuator comprising:
a housing (2);
an electric motor (M) mounted on the housing (2);
a speed reduction mechanism (6) for transmitting rotational force of the motor (M) to a ball screw mechanism (8); and
the ball screw mechanism (8) being able to convert the rotational motion of the electric motor (M) to the axial linear motion of a driving shaft (7) and comprising a nut (18) and a screw shaft (10), the nut (18) being formed with a helical screw groove (18a) on its inner circumference, secured on its outer circumference (18b) an output gear (5) forming part of the speed reduction mechanism (6) and supported rotationally but axially immovably relative to the housing (2) by a pair of supporting bearings (20, 20) mounted on the housing (2), and the screw shaft (10) formed with a helical screw groove (10a) on the outer circumference corresponding to the helical screw groove (18a) of the nut (18), adapted to be inserted into the nut (18) via a large number of balls (19), and supported not rotationally but axially movably relative to the housing (2) **characterized in:**
**that** an end face of an inner ring (23) of one supporting bearing (20) of the pair of supporting bearings (20, 20) and a side surface of the boss (32) are closely contacted each other, and
**that** the output gear (5) is configured by a gear defined in any one of claims 1∼3.

5. An electric actuator of claim 4 wherein the screw shaft (10) is coaxially integrated with the driving shaft (7).

## Patentansprüche

1. Zahnrad (5), das aus Sinterlegierung gebildet ist und umfasst:
eine Stirnradverzahnung (5a), die auf einem Umfang des Zahnrads (5) ausgebildet ist;
ein mittiges Loch (5b) in der Mitte des Zahnrads (5); und
eine Nabe (32), die um das mittige Loch (5b) ausgebildet ist, wobei
ein Umfangsabschnitt (31) radial innerseitig der Verzahnung (5a) ausgebildet ist, wobei eine Dicke einer Region zwischen der Nabe (32) und dem Umfangsabschnitt (31) dünner als die der Nabe (32) ist; **dadurch gekennzeichnet, dass**:
der Umfangsabschnitt (31) auf mindestens einer Seite des Zahnrads (5) ausgebildet ist und eine axial größere Dicke als die Verzahnung (5a) aufweist, dass ein abgestufter Abschnitt (36) zwischen einer Endfläche der Verzahnung (5a) und einer Seitenfläche des Umfangsabschnitts (31) vorgesehen ist, dass ein Abstandsmaß (δ) zwischen der Verzahnung (5a) und dem Umfangsabschnitt (31) des Zahnrads (5) innerhalb eines Bereichs von 0,1 bis 0,5 mm begrenzt ist, und dass eine Breite (W) eines abgestuften Abschnitts (36) vom Umfangsabschnitt (31) zur Verzahnungsspitze (H) auf das 1- bis 2-fache der Gesamttiefe (H) der Verzahnung (5a) festgelegt ist.

2. Zahnrad (5) nach Anspruch 1, wobei die axiale Dicke des Umfangsabschnitts (31) und die der Nabe (32) des Zahnrads (5) gleich sind, und Seitenflächen des Umfangsabschnitts (31) und der Nabe (32) mindestens einer Seite des Zahnrads (5) axial bündig zueinander sind.

3. Zahnrad (5) nach Anspruch 1 oder 2, wobei eine Vielzahl von Löchern zur Gewichtseinsparung (33) in gleichen Abständen entlang eines Kreises zwischen dem Umfangsabschnitt (31) und der Nabe (32) ausgebildet ist.

4. Elektrischer Stellantrieb, umfassend:
ein Gehäuse (2);
einen Elektromotor (M), der auf dem Gehäuse (2) montiert ist;
einen Drehzahlminderungsmechanismus (6) zum Übertragen von Drehkraft des Motors (M) an einen Kugelgewindetriebmechanismus (8); und
wobei der Kugelgewindetriebmechanismus (8) zum Umwandeln der Drehbewegung des Elektromotors (M) in die lineare Axialbewegung einer Antriebswelle (7) in der Lage ist und eine Mutter (18) und eine Schraubenwelle (10) umfasst, wobei die Mutter (18) mit einer spiralförmigen Schraubnut (18a) auf ihrem Innenumfang ausgebildet ist, auf ihrem Außenumfang (18b) ein Abtriebszahnrad (5) befestigt ist, das zum Drehzahlminderungsmechanismus (6) gehört und durch ein Paar von auf dem Gehäuse (2) montierten Traglagern (20, 20) drehbar, aber axial unbeweglich in Bezug auf das Gehäuse (2) getragen wird, und die Schraubenwelle (10) mit einer spiralförmigen Nut (10a) auf dem Außenumfang ausgebildet ist, die der spiralförmigen Schraubnut (18a) der Mutter (18) entspricht, ausgelegt ist, um über eine große Anzahl von Kugeln (19) in die Mutter (18) eingeführt zu werden, und nicht drehbar, aber axial beweglich in Bezug auf das Gehäuse (2) getragen wird, **dadurch gekennzeichnet, dass**:
eine Endfläche eines Innenrings (23) eines Traglagers (20) des Paars von Traglagern (20, 20) und eine Seitenfläche der Nabe (32) in engem Kontakt miteinander sind, und
das Abtriebszahnrad (5) durch ein Zahnrad nach einem der Ansprüche 1 bis 3 ausgelegt ist.

5. Elektrischer Stellantrieb nach Anspruch 4, wobei die Schraubenwelle (10) koaxial in die Antriebswelle (7) integriert ist.

## Revendications

1. Engrenage (5) constitué d'un alliage fritté comprenant :
une denture droite (5a) formée sur une circonférence de l'engrenage (5) ;
un trou central (5b) au centre de l'engrenage (5) ; et
un bossage (32) formé autour du trou central (5b), dans lequel
une portion périphérique (31) est formée du côté radialement interne de la denture (5a), une épaisseur d'une région entre le bossage (32) et la portion périphérique (31) étant plus mince que celle du bossage (32) ; **caractérisée en ce que** :
la portion périphérique (31) est formée sur au moins un côté de l'engrenage (5) et possède une épaisseur supérieure dans le sens axial à celle de la denture (5a), une portion étagée (36) est disposée entre une face d'extrémité de la denture (5a) et une surface latérale de la portion périphérique (31), une valeur de jeu (δ) entre la dent (5a) et la portion périphérique (31) de l'engrenage (5) est limitée dans une plage de 0,1 à 0,5 mm et une largeur (W) d'une portion étagée (36) entre la portion périphérique (31) et la pointe de la dent est définie pour être égale à une à deux fois la profondeur totale (H) de la dent (5a).

2. Engrenage (5) selon la revendication 1, dans lequel l'épaisseur axiale de la portion périphérique (31) et celle du bossage (32) de l'engrenage (5) sont égales, et les faces latérales de la portion périphérique (31) et du bossage (32) d'au moins un côté de l'engrenage (5) sont mutuellement affleurantes dans le sens axial.

3. Engrenage (5) selon la revendication 1 ou la revendication 2, dans lequel une pluralité de trous d'allègement (33) sont formés à égale distance le long d'un cercle entre la portion périphérique (31) et le bossage (32).

4. Actionneur électrique comprenant :
un boîtier (2) ;
un moteur électrique (M) monté sur le boîtier (2) ;
un mécanisme réducteur de vitesse (6) destiné à transmettre la forme de rotation du moteur (M) à un mécanisme de vis à billes (8) ; et
le mécanisme de vis à billes (8) étant en mesure de convertir le mouvement de rotation du moteur électrique (M) en mouvement linéaire axial d'un arbre d'entraînement (7) et comprenant un écrou (18) et un arbre de vis (10), l'écrou (18) étant formé avec une rainure de vis hélicoïdale (18a) sur sa circonférence interne, un engrenage de sortie (5) fixé sur sa circonférence externe (18b) faisant partie du mécanisme réducteur de vitesse (6) et étant supporté de manière à pouvoir tourner, mais fixe dans le sens axial par rapport au boîtier (2), par une paire de paliers de support (20, 20) montés sur le boîtier (2), et l'arbre de vis (10) étant formé avec une rainure de vis hélicoïdale (10a) sur sa circonférence externe correspondant à la rainure de vis hélicoïdale (18a) de l'écrou (18), adapté pour être introduit dans l'écrou (18) par l'intermédiaire d'un grand nombre de billes (19), et soutenu non pas de manière à pouvoir tourner, mais de manière mobile dans le sens axial par rapport au boîtier (2), **caractérisé en ce que** :
une face d'extrémité d'une bague interne (23) d'un palier de support (20) de la paire de paliers de support (20, 20) et une surface latérale du bossage (32) sont en contact étroit l'une avec l'autre, et
l'engrenage de sortie (5) est configuré par un engrenage défini dans l'une quelconque des revendications 1 à 3.

5. Actionneur électrique selon la revendication 4, dans lequel l'arbre de vis (10) est intégré de manière coaxiale à l'arbre d'entraînement (7).
